# EUROPEAN PATENT APPLICATION

(11) **EP 3 173 997 A1**
(43) Date of publication of application: **31.05.2017**
(21) Application number: 15196888.0
(22) Date of filing: 27.11.2015
(51) Int. Cl.: G06Q 20/28, G06Q 20/34

(54) **SAFELY FACILITATING HIGHER RISK PAYMENTS**

(71) Applicant: MASTERCARD INTERNATIONAL, INC., Purchase, NY 10577-2509 (US)
(72) Inventor: SINGH, Karan, 110091 Delhi (IN); JAMMIHAL, Vikram, Dubai (AE); PURUSHOTHAM, Sanjiv, Dubai (AE); AKBAR, Hassan, Dubai (AE); MITTAL, Sumit, New Delhi 110016 (IN)
(74) Representative: Gill Jennings & Every LLP

(57) **Abstract**

A method of facilitating e-commerce and/or contactless payments funded by a funding account that is blocked from directly making such payments, said method comprising a virtual card interface computing system, comprising an application running on a user device and a server: storing details to link a virtual card (VC) account with said funding account at said server; receiving an instruction from a user of said VC account through said application to transfer funds from the funding account to the VC account; and initiating requesting said transfer from an issuer of the funding account. Also, a method of making an e-commerce or contactless payment funded by a funding account that is blocked from directly making such payments comprising: funding a VC account according to the aforementioned method; and subsequently making said payment by providing VC credentials of the VC account to a payee.

## Description

The present disclosure relates to a method of facilitating e-commerce and/or contactless payments funded by a funding account that is blocked from directly making such payments, a method of making an e-commerce or contactless payment funded by a funding account that is blocked from directly making such payments and a computing system comprising a memory and a processor in communication with one another, said memory storing instructions which, when executed by said processor, cause it to perform either of the aforementioned methods.

### Background

Many transactions are now made using payment (e.g. debit or credit) card accounts instead of via more traditional cash or cheque transfers. However, some forms of payment card transactions are particularly vulnerable to fraud.

For instance, e-commerce transactions often only require a form on a webpage or in a dedicated application to be completed with details shown on a physical payment card. Thus, if a payment card is stolen it can be easily used to make such e-commerce transactions.

Contactless payments using e.g. near field communication (NFC) technologies built into payment cards or user devices (such as smartphones, smartwatches and tablets) linked to payment card accounts also only require possession of the card or device to effect a payment. This is because low value (e.g. less than £20) contactless transactions are generally permitted without entry of a personal identification number (PIN) being required. Contactless payments therefore also carry quite a high fraud risk.

Card associations generally manage the higher fraud risks associated with some types of payment card account transactions by charging higher interchange fees to merchants receiving higher risk types of payments. However, in some regions fraud is so common that card issuers block higher risk types of transactions from being made with the cards they issue entirely. This means that some cardholders are completely denied the convenience of contactless payments and/or the vast array of purchasing opportunities afforded by e-commerce.

What is needed is a way of providing cardholders with contactless and/or e-commerce payment opportunities when their card accounts are blocked from making such types of transaction.

### Summary

According to a first aspect, there is provided a method of facilitating e-commerce and/or contactless payments funded by a funding account that is blocked from directly making such payments, said method comprising a virtual card interface (VCI) computing system, comprising an application running on a user device and a server: storing details to link a virtual card (VC) account with said funding account at said server; receiving an instruction from a user of said VC account through said application to transfer funds from the funding account to the VC account; and initiating requesting said transfer from an issuer of the funding account.

Said contactless payments could comprise near field communication (NFC) payments.

Said contactless payments could be made using communications apparatus built in to said user device or provided in a separate tag device such as a sticker.

Said user device could be, for example, a smartphone, tablet, laptop or desktop computer.

The method could further comprise the application receiving login credentials from said user.

Said credentials could comprise one or more of: a username, a password and biometric data.

Said instruction could comprise an ad hoc funding request form with one or more completed fields. Said initiating could comprise initiating providing said issuer with funding request details comprising contents of one or more of said fields.

The fields could comprise one or more of: an identifier of the funding account, a transfer amount, contact details of a gift recipient and a gift message. Said contact details could comprise one or more of: a mobile telephone number, an email address and a VCI identifier. Said funding account identifier could comprise one or more of: a debit card number, a debit card expiry date and a debit card security code.

The method could further comprise, following the initiating, the application directing the user to an e-banking interface of the issuer to confirm a bill payment, details of which are pre-populated according to said funding request details.

Said directing could comprise directing the user to an e-banking login form of said e-banking interface, successful completion of which results in direction of the user to a bill payment confirmation pre-populated according to the funding request details.

Said e-banking interface could comprise one of a dedicated e-banking application and a web browser application pre-set to an e-banking uniform resource locator (URL).

The method could further comprise, following the initiating, the application directing the user to an application programming interface (API) of said VCI integrated with a computing system of the issuer.

Said directing could comprise directing the user to an API login form of said API, successful completion of which results in direction of the user to a transfer confirmation pre-populated according to the funding request details.

Said instruction could comprise an auto top-up options form with one or more completed fields. Said initiating could comprises: at a designated time, checking a balance of the VC account and finding it has fallen below a predetermined threshold; and responsive thereto, initiating providing said issuer with funding request details.

Checking of said balance could be performed periodically, for example hourly or daily.

The funding request details could comprise one or more of: an identifier of the funding account, a transfer amount, contact details of a gift recipient and a gift message. Said contact details could comprise one or more of: a mobile telephone number, an email address and a VCI identifier. Said funding account identifier could comprise one or more of: a debit card number, a debit card expiry date and a debit card security code.

The method could further comprise determining said funding request details according to contents of one or more of said fields.

Said initiating providing the issuer with funding request details could comprise incorporating said funding request details into a batch file to be sent to the issuer together with funding request details for one or more other VC accounts.

Said storing could comprise: receiving user contact details from said issuer; generating an inactive virtual card number; providing said user, using said contact details, with a link from which they can download the application; receiving user identification details provided by the user through the application; verifying said user identification details; and activating the VC account.

The contact details could comprise one or more of: a mobile telephone number, an email address and a physical address.

The method could further comprise: providing said user, using said contact details, with a one-time password (OTP); and subsequently receiving said OTP from the user through the application and verifying the received OTP.

Said link could be provided to the user via a different mode of communication to the OTP.

Said modes of communication could be selected from: text message, email and post.

According to a second aspect there is provided a method of making an e-commerce or contactless payment funded by a funding account that is blocked from directly making such payments comprising: funding a VC account according to the method of the first aspect; and subsequently making said payment by providing VC credentials of the VC account to a payee.

Said VC credentials could comprise one or more of: a VC number, a VC expiry date and a VC security code.

According to a third aspect there is provided a computing system comprising a memory and a processor in communication with one another, said memory storing instructions which, when executed by said processor, cause it to perform the method of either of the preceding aspects.

### Brief Description of the Drawings

Aspects of the present invention will now be described by way of example with reference to the accompanying figures. In the figures:
Figure 1 illustrates an example system;
Figure 2 is a flowchart showing an example of how new users can register to use a virtual card management application;
Figure 3 is a flowchart setting out an example of how an NFC sticker could be ordered;
Figure 4 illustrates an example funding method;
Figure 5 illustrates an alternative example funding method;
Figure 6 illustrates an example auto top-up method;
Figure 7 is a flowchart of a method of facilitating e-commerce and/or contactless payments funded by a funding account that is blocked from directly making such payments; and
Figure 8 is a flowchart of a method of making an e-commerce or contactless payment funded by a funding account that is blocked from directly making such payments.

### Detailed Description

The following description is presented to enable any person skilled in the art to make and use the system, and is provided in the context of a particular application. Various modifications to the disclosed embodiments will be readily apparent to those skilled in the art.

What is proposed is to safely facilitate higher risk transactions when a payment card account has been blocked from making such transactions by using a virtual card (VC) as a proxy for a payment card.

A virtual card interface (VCI) computing system, comprising an application running on a user device and a server, provides a VC account, means of managing that account (including topping it up), and means of making payments with the VC. Details to link a VC account with a funding (traditional payment card) account are stored at the server. Instructions from a user of the VC account to transfer funds from the funding account to the VC account are received through the application. The VCI then initiates requesting the transfer from the issuer of the funding account card.

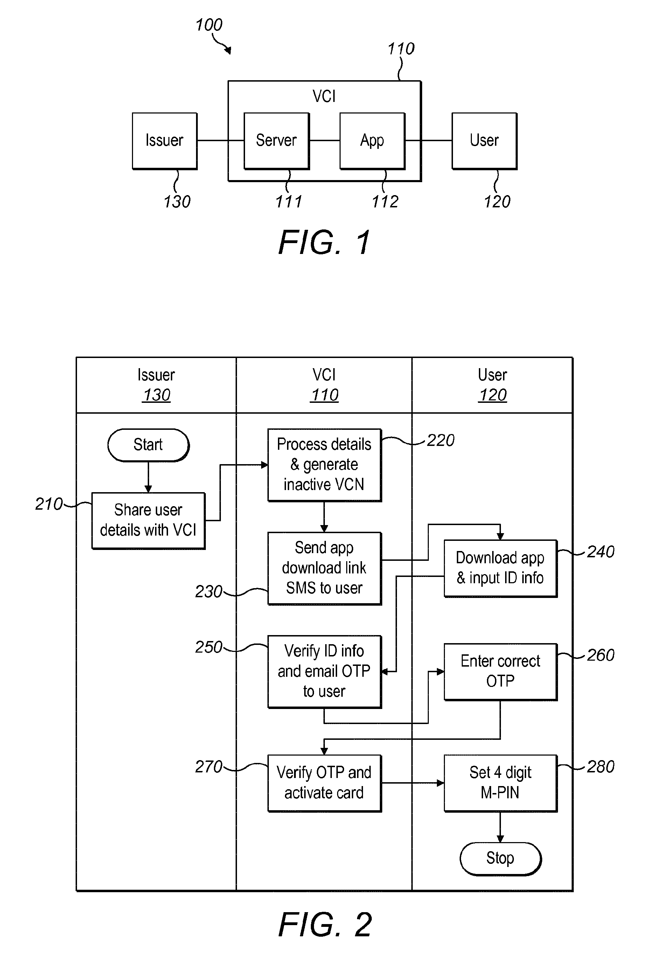

Figure 1 illustrates a system 100 in which a VCI 110 comprising a server 111 and an application 112 can manage virtual card operations enacted by an end user 120 on behalf of a VC issuer 130 such as a bank.

The end user 120 can communicate with the application 112 via one or more user interface devices of a user device on which the application is running. Such a user device could be, for example, a smartphone, tablet, laptop or desktop computer. The user interface device(s) could be, for example, one or more of a touchscreen, monitor, selection buttons, keyboard, speaker or microphone.

The application 112 can communicate with the server 111 via a wired or wireless network, for example a cellular telecommunications network.

Similarly, server 111 can communicate with issuer 130 via a wired or wireless network, for example the Internet.

Figure 2 is a flowchart showing how new users can register to use such a virtual card management application.

At 210, issuer 130 shares details of an end user 120 who is to be offered the VCI service with the VCI 110. Such details could include for example one or more of: name, customer ID, account number, mobile phone number, email address, date of birth, nationality, debit card number, debit card expiry date and debit card verification code (e.g. CVC2). Multiple sets of end user details could be shared together in batches. Since the issuer 130 will already have performed 'know your customer' (KYC) checks on end user 120, none need to be done by VCI 110 (but they could be for additional security).

At 220, VCI 110 processes the shared details and generates a virtual card number (VCN) for the end user.

At 230, VCI 110 sends an SMS text message to end user 120, including a link to an application download.

At 240, end user 120 downloads application 112 and inputs identification information, for example mobile telephone number and date of birth.

At 250, the identification information is verified by VCI 110 and a one-time passcode (OTP) is sent to the end user's email address or mobile telephone number.

At 260, the end user 120 provides the OTP to application 112.

At 270, VCI 110 verifies the OTP and activates the VCN.

At 280, end user 120 sets a 4 digit mobile personal identification number (M-PIN) for subsequent authentication of their identity when using application 112.

The end user 120 can then use application 112 to manage their new virtual card. The virtual card can be used for e-commerce transactions over the internet.

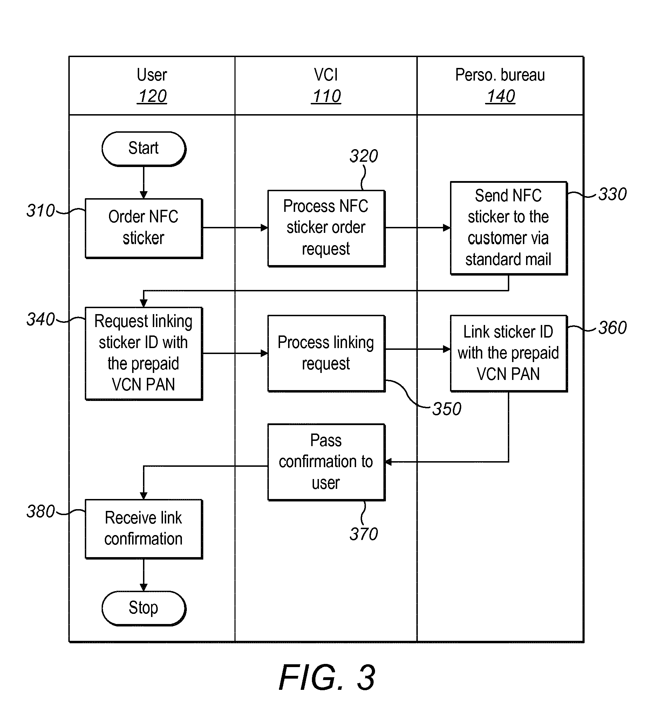

The VCN could also be used for contactless payments if a near field communication (NFC) sticker is obtained. Such a sticker could, for example, be affixed to the end user's wallet or mobile telephone or to a key-ring. Figure 3 is a flowchart setting out how such an NFC sticker could be ordered.

At 310, end user 120 places an order through VCI application 112.

At 320, VCI 110 processes the order and sends a request to a personalisation bureau 140.

At 330, personalisation bureau 140 receives the request and mails a new sticker to end user 120.

At 340, end user 120 uses VCI application 112 to request linking of the received sticker with the VCN.

At 350, VCI 110 processes the linking request and passes it on to personalisation bureau 140.

At 360, personalisation bureau 140 links the sticker with the VCN and confirms this to VCI 110.

At 370, VCI 110 receives this confirmation and informs the end user 120 via application 112 that their NFC sticker is ready to use.

At 380, end user 120 receives the confirmation. They can then start using the sticker to make payments, for example payments below a threshold value. Payments could for example be authorised up to some maximum total value per day.

Several alternatives are available for funding the virtual card through the VCI application.

For example, a credit or debit card could be set up as the funding source for the virtual card during the registration process and the VCI application can then be used to top-up the virtual card with a specified amount via e-commerce subject to authorisation, e.g. via input of the M-PIN.

Alternatively, funding could be performed by e-banking through the VCI. The VCI application 112 could provide a link to a mobile banking landing page. The end user can then fill out their usual e-banking login credentials. Once their credentials have been verified, a transaction form can automatically be displayed with the payee details auto-filled for the virtual card account. The end user can then enter the desired top-up amount and confirm the transaction. Details of the transaction can be provided to the VCI 110 by the issuer 130. The VCI 110 can then credit the virtual card and send the end user a notification via SMS text message. The VCI 110 also informs the issuer 130 that the virtual card credit is complete so that the issuer can reconcile the transaction. This could for example be done for all e-banking funding requests daily in a batch file.

In this manner, e-banking bill payment protocols are re-purposed for funding a prepaid virtual card. Thus, the issuer does not need to set up any new infrastructure to provide a prepaid virtual card to its customers.

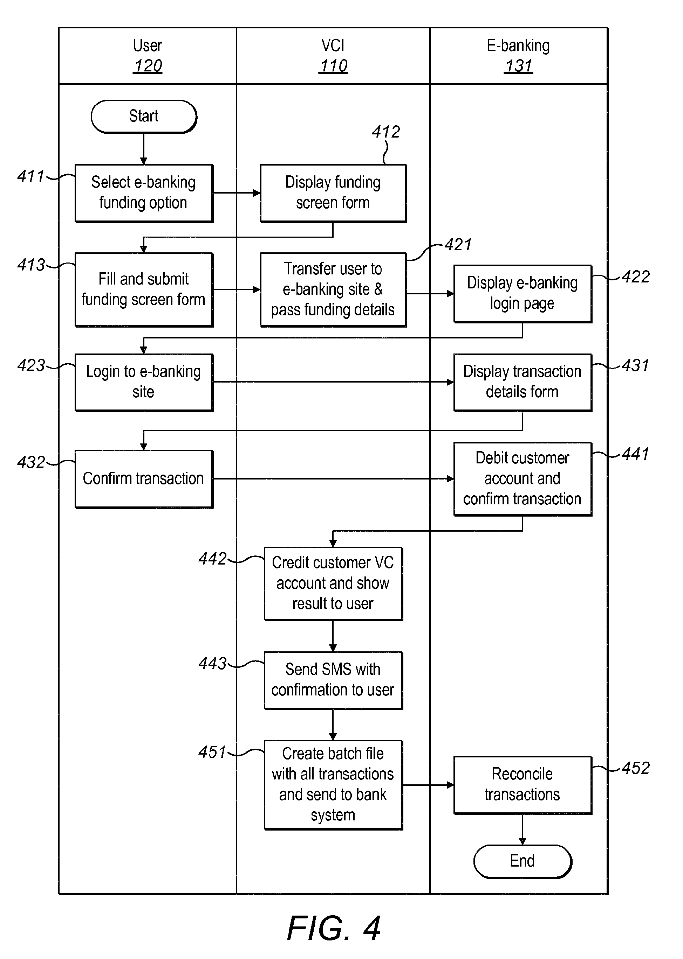

Figure 4 illustrates this funding method.

At 411 end user 120 selects the e-banking funding option in application 112. At 412, application 112 displays a funding screen form, into which the end user can enter or select one or more desired details of the top-up, such as amount. At 413, the user fills out and submits the form.

At 421, application 112 passes top-up details to an e-banking system 131 and transfers the user to their e-banking login page, which is displayed by the e-banking system at 422. At 423, the end user 120 logs on to e-banking.

At 431, the e-banking system 131 displays the transaction details, for end user 120 to confirm at 432.

At 441, e-banking debits the end user's account and confirms to the VCI that the transaction has been completed. The user is then transferred back to application 112 which credits the virtual card account and displays the new virtual card balance at 442. At 443, the application 112 sends an SMS text message to end user 120 to confirm the top-up.

At 451, application 112 sends completed transaction details to the e-banking system, for example in a batch file at the end of a predetermined period such as a day, week or month. The e-banking system 131 then reconciles the transaction(s) at 452.

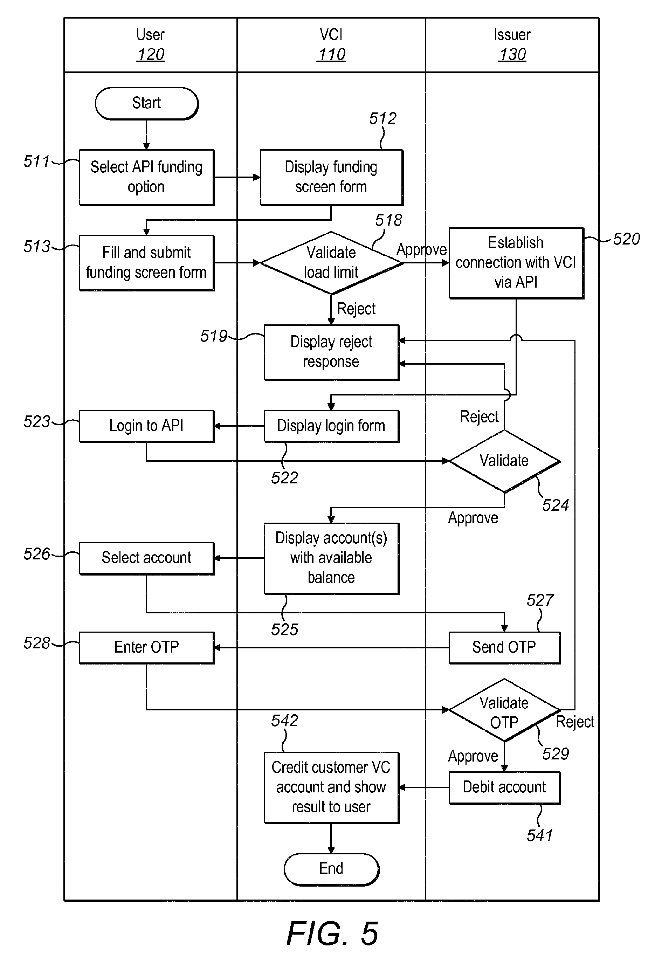

If the funding account issuer does not provide an e-banking service, or if the user 120 is not registered for such a service, or does not have an appropriate e-banking application on the device they are running the VCI application on, an alternative funding method is required. Figure 5 illustrates such an alternative funding option for a VC. This method is similar to that of Figure 4, but uses a dedicated API to interface with systems of issuer 130 rather than the issuer's existing e-banking service. A custom API could be developed for each issuer the VCI provider has links with.

At 511 user 120 selects the API funding option from a funding screen of VCI application 112. In response, at 512 VCI 110 displays a funding screen form into which the end user can enter or select one or more desired details of the top-up, such as amount. At 513, the user fills out and submits the form.

At 518 VCI 110 optionally checks that the top-up requested does not exceed a predetermined load limit. If it does, the funding request is rejected at 519. Otherwise, at 520 a connection with issuer 130 is established via a dedicated API.

At 522 a login form is displayed to the user by VCI application 112. At 523 the user 120 fills and submits the form to login to the API. The credentials submitted in the completed login form (e.g. username and API-specific password or MPIN as mentioned above) are checked at 524. If they do not match stored values then the funding request is rejected at 519. Otherwise, an accounts screen is displayed to the user by VCI application 112 at 525. This screen displays one or more funding accounts available to the logged-in user with balances high enough to provide the requested amount, optionally together with the current balance of those accounts.

At 526 user 120 selects a funding account, triggering the API to send an OTP to the user 120, for example in a text message or an email directed to a mobile telephone number or email address stored for that user. At 528 user 120 enters the OTP into a user interface of VCI application 112. The OTP is checked by the API at 529. If it is incorrect, the funding request is rejected at 519. Otherwise, the selected funding account is debited at 541.

At 542 VCI 110 credits the VC account and shows the new VC balance to user 120.

Note that in the foregoing, where the funding request is rejected at 519, the VCI application 112 could optionally loop user 120 back to have another try at the failed step. This could occur indefinitely or only up to a predetermined number (e.g. three) times.

E-banking can also be used to fund automatic top-ups so that funds are pulled from an end user's bank account via an e-banking payment automatically whenever the balance of the prepaid virtual card falls below a predetermined threshold. This could be set up as follows.

The end user could select recurring funding as their preferred funding option in the VCI application, which will then present them with a form to select/complete details such as threshold amount and top-up amount. The VCI then saves the funding details and adds them to an auto-scheduler.

When the threshold amount is crossed, the VCI server sends a funding request to the e-banking system. The e-banking system completes the top-up transaction and reports back to the VCI. The VCI then sends a confirmation SMS text message to the end user e.g. with information as to which accounts have been debited and credited.

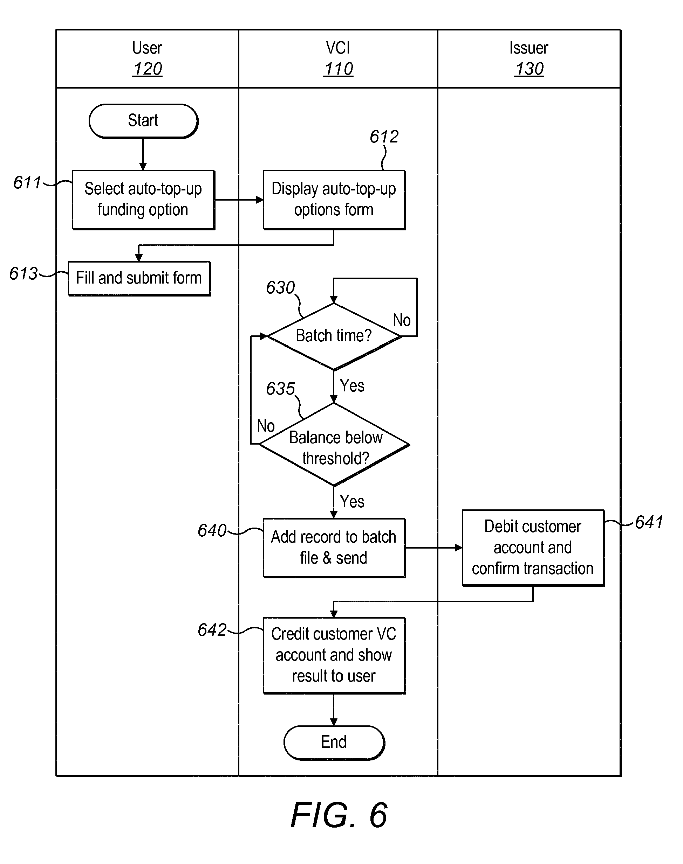

Figure 6 illustrates such an auto top-up method.

At 611 user 120 selects the auto top-up funding option from a funding screen of VCI application 112. In response, the application displays an auto top-up options form at 612. At 613 the user fills out and submits the form. It could for example specify one or more of: a lower threshold for the VC account balance, an amount to be automatically topped up by when the VC balance falls below that threshold (or a predetermined threshold that can't be varied by the user), details of a funding account to top up the VC from and credentials providing access to that funding account.

The VCI 110 is configured to prepare and send a batch file of funding requests periodically (e.g. daily or hourly) at a predetermined time. At 630 the time is checked and, when the "batch time" arrives, at 635 the VC balance is checked. If it is above the pre-set threshold then the VCI waits for the next batch time. If the VCI balance is below the threshold however, at 640 a record identifying the VC account to be topped up (and optionally the amount to be topped up by and/or details identifying and/or providing access to the funding account to use) is added to a batch file, optionally with funding requests from other VCs, and the batch file is sent to issuer 130.

At 641 issuer 130 received the batch file, processes it, debits the VC account and confirms this to the VCI. At 642 VCI 110 credits the VC account and optionally confirms the top-up to the user, e.g. by showing the user 120 their new VC balance.

In the ways described above, and others, VCs can be topped up via pull or push funding requests from/to funding accounts.

The funding account need not necessarily be held by the same person as the VC account. For example a parent or employer could have access to a VCI application to top-up a VC held by their child or employee. One-time load VCs could also be given as gifts using the VCI.

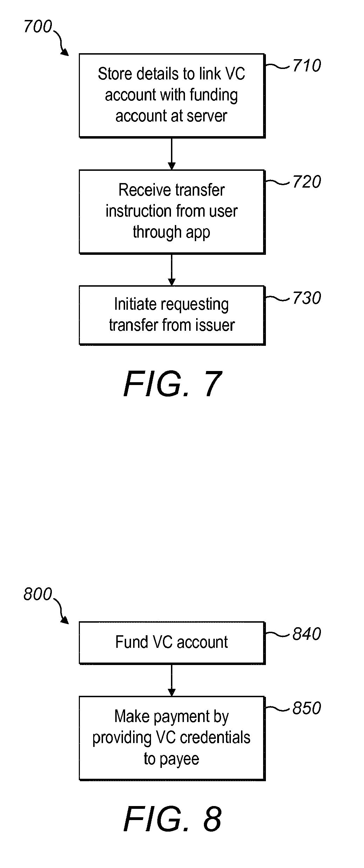

Figure 7 is a flowchart of a method 700 of facilitating e-commerce and/or contactless payments funded by a funding account that is blocked from directly making such payments. At 710 details to link a VC account with a funding account are stored at a server. At 720 a transfer instruction is received from a user through an application. At 730 a request for the transfer from the funding account issuer is initiated.

Figure 8 is a flowchart of a method 800 of making an e-commerce or contactless payment funded by a funding account that is blocked from directly making such payments. At 840 a VC account is funded. At 850 a payment is made by providing VC credentials to a payee.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

## Claims

1. A method of facilitating e-commerce and/or contactless payments funded by a funding account that is blocked from directly making such payments, said method comprising a virtual card interface (VCI) computing system, comprising an application running on a user device and a server:
storing details to link a virtual card (VC) account with said funding account at said server;
receiving an instruction from a user of said VC account through said application to transfer funds from the funding account to the VC account; and
initiating requesting said transfer from an issuer of the funding account.

2. The method of claim 1, further comprising the application receiving login credentials from said user.
Said credentials could comprise one or more of: a username, a password and biometric data.

3. The method of either of claims 1 or 2, wherein:
said instruction comprises an ad hoc funding request form with one or more completed fields; and
said initiating comprises initiating providing said issuer with funding request details comprising contents of one or more of said fields.

4. The method of claim 3, further comprising, following the initiating, the application directing the user to an e-banking interface of the issuer to confirm a bill payment, details of which are pre-populated according to said funding request details.

5. The method of claim 4, wherein said directing comprises directing the user to an e-banking login form of said e-banking interface, successful completion of which results in direction of the user to a bill payment confirmation pre-populated according to the funding request details.

6. The method of claim 3, further comprising, following the initiating, the application directing the user to an application programming interface (API) of said VCI integrated with a computing system of the issuer.

7. The method of claim 6, wherein said directing comprises directing the user to an API login form of said API, successful completion of which results in direction of the user to a transfer confirmation pre-populated according to the funding request details.

8. The method of either of claims 1 or 2, wherein:
said instruction comprises an auto top-up options form with one or more completed fields; and
said initiating comprises:
at a designated time, checking a balance of the VC account and finding it has fallen below a predetermined threshold; and
responsive thereto, initiating providing said issuer with funding request details.

9. The method of claim 8, further comprising determining said funding request details according to contents of one or more of said fields.

10. The method of either of claims 8 or 9, wherein said initiating providing the issuer with funding request details comprises incorporating said funding request details into a batch file to be sent to the issuer together with funding request details for one or more other VC accounts.

11. The method of any preceding claim, wherein said storing comprises:
receiving user contact details from said issuer;
generating an inactive virtual card number;
providing said user, using said contact details, with a link from which they can download the application;
receiving user identification details provided by the user through the application;
verifying said user identification details; and
activating the VC account.
The contact details could comprise one or more of: a mobile telephone number, an email address and a physical address.

12. The method of claim 11, further comprising:
providing said user, using said contact details, with a one-time password (OTP); and subsequently
receiving said OTP from the user through the application and verifying the received OTP.

13. The method of claim 12, wherein said link is provided to the user via a different mode of communication to the OTP.

14. A method of making an e-commerce or contactless payment funded by a funding account that is blocked from directly making such payments comprising:
funding a VC account according to the method of any preceding claim; and
subsequently making said payment by providing VC credentials of the VC account to a payee.

15. A computing system comprising a memory and a processor in communication with one another, said memory storing instructions which, when executed by said processor, cause it to perform the method of any preceding claim.
